# EUROPÄISCHE PATENTSCHRIFT

(11) **EP 2 486 511 B1**
(45) Veröffentlichungstag und Bekanntmachung des Hinweises auf die Patenterteilung: **20.05.2015**
(21) Anmeldenummer: 10771375.2
(22) Anmeldetag: 29.09.2010
(51) Int. Cl.: B42D 25/305, B42D 25/41, B23K 26/00, G06K 1/12

(54) **LASERBESCHRIFTUNG ALS SICHERHEITSMERKMAL und Beschriftungsverfahren**
LASER MARKING AS SECURITY FEATURE and marking method
INSCRIPTION LASER COMME ÉLÉMENT DE SÉCURITÉ et procédé d'inscription

(30) Priorität: 05.10.2009 DE 102009048293
(43) Veröffentlichungstag der Anmeldung: 15.08.2012
(73) Patentinhaber: Schaeffler Technologies AG & Co. KG, 91074 Herzogenaurach (DE)
(72) Erfinder: GIESE, Mario, 91336 Heroldsbach (DE)
(86) Internationale Anmeldenummer: PCT/EP2010/064418
(87) Internationale Veröffentlichungsnummer: WO 2011/042337

(56) Entgegenhaltungen:
- WO-A1-99/05636
- DE-A1-102005 038 732
- US-A- 5 247 154
- US-A- 5 492 571
- US-A- 5 632 916

## Beschreibung

### Gebiet der Erfindung

Die Erfindung betrifft eine als Sicherheitsmerkmal vorgesehene Laserbeschriftung auf einem metallischen Werkstück.

### Hintergrund der Erfindung

Aus der DE 101 15 949 A1 ist eine unsichtbare Laserbeschriftung als Sicherheitsmerkmal für Kunststoffkarten bekannt. Diese Laserbeschriftung ist mit bloßem Auge unsichtbar, wobei sie entweder mit einem Laser im NIR-Bereich eingeschrieben und mit einem im NIR-Bereich wirksamen Detektor ausgelesen wird oder mit einem Laser im UV-Bereich eingeschrieben und mit einem im UV-Bereich wirksamen Detektor ausgelesen wird. Die DE 101 15 949 A1 betrifft ausschließlich die Kennzeichnung von Kunststoffkarten.

Ein Verfahren zur Kennzeichnung eines metallischen Gegenstandes ist beispielsweise aus der DE 10 2005 038 732 A1 bekannt. Bei diesem Verfahren wird metallisches Gefüge insbesondere mit einem Laserstrahl umgewandelt.

Aus der WO 99/05636 A1 ist ein Verfahren zum Erzeugen und Auslesen einer Laserbeschriftung sowie einer Sicherheitskennzeichnung bekannt, wobei die Sicherheitskennzeichnung mittels Wirbelstrom auslesbar ist.

### Aufgabe der Erfindung

Der Erfindung liegt die Aufgabe zugrunde, die Einsatzmöglichkeiten sowie die Sicherheit einer Laserbeschriftung gegenüber dem Stand der Technik zu verbessern.

### Zusammenfassung der Erfindung

Diese Aufgabe wird erfindungsgemäß gelöst durch ein mit einer Laserbeschriftung versehenes Werkstück mit den Merkmalen des Anspruchs 1. Weiter wird die Aufgabe gelöst durch ein Verfahren mit den Merkmalen des Anspruchs 5.

Im Folgenden im Zusammenhang mit dem Verfahren erläuterte Ausgestaltungen und Vorteile gelten sinngemäß auch für das Werkstück und umgekehrt.

Die Erfindung vereint eine sichtbare Beschriftung, nämlich Laserbeschriftung, mit einer unsichtbaren Sicherungskennzeichnung. In jedem Fall wird die Sicherungskennzeichnung in einem einzigen Arbeitsgang mit der Laserbeschriftung erzeugt. Als Ergebnis entsteht eine Oberfläche der Sicherungskennzeichnung, die die Laserbeschriftung darstellt und in sich, soweit ohne Hilfsmittel optisch feststellbar, einheitlich ist. Im Gegensatz zur Laserbeschriftung, welche mit bloßem Auge erkennbar ist, ist die Sicherungskennzeichnung ausschließlich maschinell auslesbar. Unter einem maschinellen Auslesen wird jeder Lese- oder Analysevorgang verstanden, der unter Zuhilfenahme von technischen Geräten vollzogen wird. Hierbei kann es sich um einen zerstörenden Vorgang ebenso wie um eine zerstörungsfreie Untersuchung des Werkstücks handeln. Beispielsweise wird die Sicherungskennzeichnung mittels Thermografie, Ätzen oder Gefügeprüfung mittels Wirbelstrom sichtbar gemacht.

Mit der Erzeugung von Sicherungskennzeichnung und Laserbeschriftung in einem einzigen Arbeitsgang entstehen deckungsgleiche Kennzeichnungs- beziehungsweise Sicherungsstrukturen.

Die Sicherungskennzeichnung umfasst voneinander unterscheidbare Bereiche, welche ohne Beschränkung der Allgemeinheit als Wärmeeindringzonen bezeichnet werden. Unterschiedlich tiefe Wärmeeindringzonen sind auf einfache Weise erzeugbar, indem die Dauer und/oder Intensität der Laserbestrahlung, welche auf den entsprechenden Bereich des Werkstücks einwirkt, variiert wird.

Die unterschiedliche Erstreckung verschiedener Bereiche der Sicherungsstrukturen in das Innere des Werkstücks beeinflusst dessen mechanische Eigenschaften nicht in relevanter Weise. Die Laserbeschriftung kann beispielsweise als Klartextbeschriftung, Strich-Code und/oder Data-Matrix-Code gestaltet sein.

Nachfolgend wird ein Ausführungsbeispiel der Erfindung anhand einer Zeichnung näher erläutert. Hierin zeigen:

### Kurze Beschreibung der Zeichnung

- Fig. 1: ausschnittsweise ein mit einer Laserbeschriftung versehenes Werkstück in Draufsicht,
- Fig. 2: einen schematischen Schnitt durch das Werkstück nach Fig. 1.

### Ausführliche Beschreibung der Zeichnung

Ein im Ausführungsbeispiel flächiges, nur in einem kleinen Ausschnitt dargestelltes Werkstück 1 aus Stahl ist mit einer Laserbeschriftung 2 versehen, die - soweit in den Figuren sichtbar - beispielsweise der Buchstabe "i" oder ein Teil eines Data-Matrix-Codes sein kann. Die gesamte Laserbeschriftung 2 weist an der Oberfläche 3 des Werkstücks 1 eine einheitliche Färbung und Struktur auf, so dass sie mit bloßem Auge nicht von einer herkömmlichen Anlass-Laserbeschriftung unterscheidbar ist.

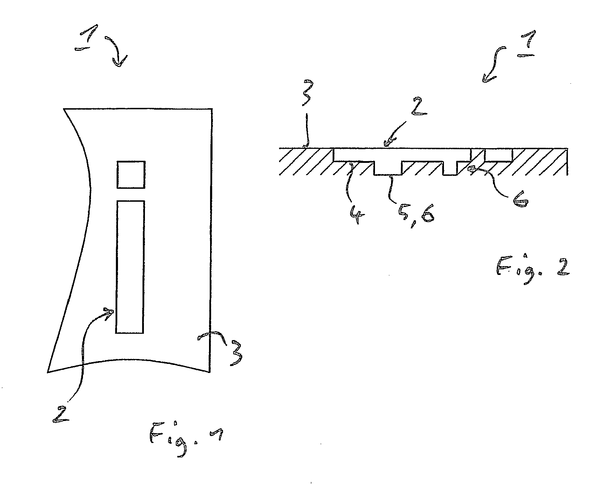

Unterschiede zu einer herkömmlichen Anlass-Laserbeschriftung sind jedoch unterhalb der Oberfläche 3 gegeben, wie in Fig. 2 grob schematisiert veranschaulicht ist: Durch die Laserbestrahlung, mit der die Laserbeschriftung 2 erzeugt ist, sind innerhalb des Werkstücks 1 verschiedene Wärmeeindringzonen 4,5 gebildet, die sich hinsichtlich ihrer von der Oberfläche 3 aus gemessenen Tiefe gezielt voneinander unterscheiden. Im dargestellten Ausführungsbeispiel existieren lediglich zwei verschiedene Tiefen der Wärmeeindringzonen 4,5, was für eine Codierung im Sinne eines binären Codes ausreichend ist. Abweichend hiervon kann auch eine größere Zahl unterschiedlicher Eindringtiefen vorgesehen sein. Ebenso ist es möglich, innerhalb des Werkstücks 1 Wärmeeindringzonen 4,5 mit sich kontinuierlich ändernder Tiefe herzustellen. In allen Fällen weist die Laserbeschriftung 2 ein einheitliches Erscheinungsbild auf, so dass der Berachter keine Hinweise auf eine zusätzliche Sicherungskennzeichnung 6, wie sie in Form der eine gestaffelte Tiefe aufweisenden Wärmeeindringzonen 4,5 gegeben ist, erhält.

In besonders einfacher Ausgestaltung können auf der Oberfläche 3 des Werkstücks 1 mehrere einzelne Zeichen, beispielsweise Buchstaben, Ziffern, Linien oder Punkte, als Teil der Laserbeschriftung 2 kenntlich gemacht sein, wobei jedes Zeichen die Oberfläche einer einzigen Wärmeeindringzone 4,5 mit in sich konstanter Tiefe darstellt. Bei einer aus 20 Zeichen bestehenden Laserbeschriftung 2 sind somit bei zwei unterschiedlich tiefen Wärmeeindringzonen 4,5 ungefähr 10⁶ verschiedene Sicherungskennzeichnungen 6 herstellbar. Im Fall von unterschiedlich tiefen Wärmeeindringzonen 4,5 innerhalb eines einzigen Zeichens der Laserbeschriftung 2, wie in Fig. 2 dargestellt, ist selbst bei Werkstücken 1, die in extrem großer Serie hergestellt werden, jedes einzelne Werkstück 1 mit einer individuellen Sicherungskennzeichnung 6 versehbar.

Um die Sicherungskennzeichnung 6 auszulesen, kann beispielsweise das Werkstück 1 durch Ätzen mit definierter Ätzdauer behandelt werden, wobei die Laserbeschriftung 2 hierdurch zerstört wird. Alternativ kann in zerstörungsfreien Prüfverfahren beispielsweise bei einer Wirbelstromprüfung die Prüffrequenz variiert werden oder bei Thermografie mit definierten Lockln-Frequenzen gearbeitet werden.

Bei der Markierung des Werkstücks 1 mit der Laserbeschriftung 2 und gleichzeitigen Erzeugung der Sicherungskennzeichnung 6 ist es nicht erforderlich, die Merkmale der Sicherungskennzeichnung 6, etwa entsprechend einem Auslesen der Laserbeschriftung 2, sofort zu verifizieren. Vielmehr ist es ausreichend, aus den gewählten Prozessparametern, insbesondere der Intensität oder Dauer der innerhalb der Oberfläche 3 gezielt variierten Laserbestrahlung, auf die Eigenschaften der Wärmeeindringzonen 4,5 zu schließen. Die Prozessparameter und/oder die mit diesem in einem eindeutigen Zusammenhang stehenden Eigenschaften der Wärmeeindringzonen 4,5 werden im Rahmen der Herstellung und Kennzeichnung des Werkstücks 1 automatisch gespeichert, so dass zu einem beliebigen späteren Zeitpunkt feststellbar ist, ob die Laserbeschriftung 2 des Werkstücks 1 dessen Sicherungskennzeichnung 6 entspricht und somit ein Originalteil vorliegt.

### Bezugszeichenliste

- 1: Werkstück
- 2: Laserbeschriftung
- 3: Oberfläche
- 4: Wärmeeindringzone
- 5: Wärmeeindringzone
- 6: Sicherungskennzeichnung

## Patentansprüche

1. Werkstück, welches aus Metall gefertigt ist und eine Laserbeschriftung (2) als Sicherheitsmerkmal aufweist, wobei die Laserbeschriftung (2) mit bloßem Auge erkennbar und unterhalb der Laserbeschriftung (2) eine mit dieser deckungsgleiche, ausschließlich maschinell auslesbare Sicherungskennzeichnung (6) vorgesehen ist, **dadurch gekennzeichnet, dass** die Laserbeschriftung (2) als Anlassbeschriftung ausgebildet ist und die Sicherungskennzeichnung (6) unterschiedlich tiefe Wärmeeindringzonen (4,5) umfasst, wobei die Laserbeschriftung (6) durch die Oberflächen der Wärmeeindringzonen (4,5) gebildet ist.

2. Werkstück nach Anspruch 1, **dadurch gekennzeichnet, dass** die Laserbeschriftung (2) eine einheitliche Färbung aufweist.

3. Werkstück nach einem der Anspruch 1 oder 2, **dadurch gekennzeichnet, dass** die Laserbeschriftung (2) als Klartextbeschriftung ausgebildet ist.

4. Werkstück nach einem der Anspruch 1 oder 2, **dadurch gekennzeichnet, dass** die Laserbeschriftung (2) als Data-Matrix-Code ausgebildet ist,

5. Verfahren zur Erzeugung einer Laserbeschriftung (2) auf einem Werkstück (1) aus Metall, wobei auf dem Werkstück (1) mittels Laserbestrahlung eine Anlassbeschriftung erzeugt und gleichzeitig innerhalb des Werkstücks (1) durch Variation der Laserbestrahlung eine an der Oberfläche (3) des Werkstücks (1) nicht mit bloßem Auge erkennbare Sicherungskennzeichnung (6) erzeugt wird, **dadurch gekennzeichnet, dass** innerhalb der Sicherungskennzeichnung (6) verschieden tiefe Wärmeeindringzonen (4,5) durch Variation der Dauer oder Intensität der Laserbestrahlung erzeugt werden.

## Claims

1. Workpiece made of metal and having a laser inscription (2) as a security feature, wherein the laser inscription (2) is visible to the naked eye and there is provided, beneath the laser inscription (2) and congruent with the latter, an exclusively machinereadable security marking (6), **characterized in that** the laser inscription (2) is formed as an initial inscription and the security marking (6) comprises thermal penetration regions (4, 5) of different depths, wherein the laser inscription (2) is formed by the surfaces of the thermal penetration regions (4, 5).

2. Workpiece according to Claim 1, **characterized in that** the laser inscription (2) has uniform coloration.

3. Workpiece according to either of Claims 1 and 2, **characterized in that** the laser inscription (2) is formed as a plain text inscription.

4. Workpiece according to either of Claims 1 and 2, **characterized in that** the laser inscription (2) is formed as a data matrix code.

5. Method for generating a laser inscription (2) on a metal workpiece (1), wherein an initial inscription is produced on the workpiece (1) by means of laser irradiation and, simultaneously, there is produced within the workpiece (1), by varying the laser irradiation, a security marking (6) which is not visible to the naked eye on the surface (3) of the workpiece (1), **characterized in that**, within the security marking (6), thermal penetration regions (4, 5) of different depths are generated by varying the duration or the intensity of the laser irradiation.

## Revendications

1. Pièce fabriquée en métal, présentant une inscription laser (2) en tant que caractéristique de sécurité, l'inscription laser (2) pouvant être décelée à l'oeil nu et sous l'inscription laser (2) étant prévue une marque de sécurité (6) lisible exclusivement par machine, en coïncidence avec celle-ci, **caractérisée en ce que** l'inscription laser (2) est réalisée sous forme d'inscription gravée et la marque de sécurité (6) comprend des zones de pénétration thermique de profondeurs différentes (4, 5), l'inscription laser (2) étant formée par les surfaces des zones de pénétration thermique (4, 5).

2. Pièce selon la revendication 1, **caractérisée en ce que** l'inscription laser (2) présente une coloration unitaire.

3. Pièce selon l'une quelconque des revendications 1 ou 2, **caractérisée en ce que** l'inscription laser (2) est réalisée sous forme d'inscription en texte clair.

4. Pièce selon l'une quelconque des revendications 1 ou 2, **caractérisée en ce que** l'inscription laser (2) est réalisée sous forme de code matriciel de données.

5. Procédé pour produire une inscription laser (2) sur une pièce (1) en métal, une inscription gravée étant produite sur la pièce (1) au moyen d'un rayonnement laser et simultanément à l'intérieur de la pièce (1) par variation du rayonnement laser une marque de sécurité (6) sur la surface (3) de la pièce (1), laquelle n'est pas décelable à l'oeil nu, étant produite, **caractérisé en ce qu'**à l'intérieur de la marque de sécurité (6) sont produites des zones de pénétration thermique de profondeurs différentes (4, 5) par variation de la durée ou de l'intensité du rayonnement laser.
